# EUROPÄISCHE PATENTSCHRIFT

(11) **EP 0 889 669 B1**
(45) Veröffentlichungstag und Bekanntmachung des Hinweises auf die Patenterteilung: **22.02.2006**
(21) Anmeldenummer: 98202146.1
(22) Anmeldetag: 26.06.1998
(51) Int. Cl.: H04Q 11/04

(54) **Kommunikationssystem mit Sonderkanal**
Communication system with special channel
Système de communication avec un canal spécial

(30) Priorität: 03.07.1997 DE 19728505
(43) Veröffentlichungstag der Anmeldung: 07.01.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Duque-Anton, Jesus-Manuel, Dr., Röntgenstrasse 24, 22335 Hamburg (DE); Günther, Ralf, Röntgenstrasse 24, 22335 Hamburg (DE); Meuser, Thomas, Dr., Röntgenstrasse 24, 22335 Hamburg (DE); Wasel, Josef, Dr., Röntgenstrasse 24, 22335 Hamburg (DE); Karabek, Raschid, Röntgenstrasse 24, 22335 Hamburg (DE)
(74) Vertreter: Volmer, Georg

(56) Entgegenhaltungen:
- EP-A- 0 449 095
- WO-A-95/25411
- GB-A- 2 308 040

## Beschreibung

Die Erfindung bezieht sich auf ein nach dem asynchronen Transfermodus (ATM) arbeitendes Kommunikationssystem mit mehreren Koppelelementen, die
- ein Netzwerk bilden und die teilweise untereinander und mit Terminals gekoppelt sind und
- jeweils ein Koppelfeld und eine Steuerungssoftware wenigstens zur Steuerung des jeweiligen Koppelfeldes und für die Signalisierung enthalten.

Ein solches Kommunikationssystem ist aus dem Buch "ATM, Konzepte - Trends - Migration" von M. Hein und N. von der Lancken, Internat. Thomson Publ., 1997, Bonn, Seiten 97 bis 104 bekannt. Dieses weist ein Netzwerk mit mehreren Koppelelementen und mit bestimmten Koppelelementen verbundene Terminals oder Endgeräte auf. Ein solches Endgerät kann ein Fernsprecher, ein PC, eine Workstation, ein Server usw. sein. Ein Koppelelement enthält ein Koppelfeld mit einer Steuerungssoftware, welche die Wege im Koppelfeld schaltet und u.a. auch zur Signalisierung dient. Aus WO-A-95 25 411 ist ein ATM-Koppel-element bekannt das Steuerungssoftware zur Steuerung des Koppelfeldes und der Signalisierung enthält.

Der Erfindung liegt die Aufgabe zugrunde, ein Kommunikationssystem zu schaffen, daß bestimmten Objekten der Steuerungssoftware einen Zugriff auf Informationen eines Terminals oder eines anderen Koppelelementes ermöglicht.

Die Aufgabe wird durch ein Kommunikationssystem der eingangs genannten Art dadurch gelöst,
daß wenigstens ein Objekt der Steuerungssoftware bei bestimmten Zuständen Ausstiegspunkte enthält,
daß ein Objekt zur Ausstiegspunktbehandlung der Steuerungssoftware bei Erreichen eines Ausstiegspunktes zur weiteren Verarbeitung vorgesehen ist und
daß das Objekt zur Ausstiegspunktbehandlung über einen Sonderkanal zum Empfang von Daten von wenigstens einem Terminal oder einem anderen Koppelelement vorgesehen ist.

Die Koppelelemente des erfindungsgemäßen Kommunikationssystems enthalten eine Steuerungssoftware, die einem Objekt der Steuerungssoftware ermöglicht, über ein Objekt zur Ausstiegspunktbehandlung auf einen Sonderkanal zuzugreifen. Der Sonderkanal ist realisiert, indem Zellen einer bestimmten Zellart Informationen für das Objekt zur Ausstiegspunktbehandlung transportieren. Hierbei werden Informationen, die zu dem Objekt zur Ausstiegspunktbehandlung geliefert oder von dem Objekt zur Ausstiegspunktbehandlung kommen, in einer Steuerungsvorrichtung in Zellen verpackt oder aus Zellen entpackt. Ein Objekt der Steuerungssoftware enthält bei bestimmten Zuständen Ausstiegspunkte. Ist ein solcher Ausstiegspunkt erreicht, wird die weitere Verarbeitung von dem Objekt zur Ausstiegspunktbehandlung übernommen. Dieses Objekt ist in der Lage, mit Terminals oder anderen Koppelelementen über den Sonderkanal zu kommunizieren. Empfangene Informationen können dann gegebenenfalls an das Objekt geliefert werden, welches nach Erreichen des Ausstiegspunktes die Kontrolle an das Objekt zur Ausstiegspunktbehandlung gegeben hat. Durch den Sonderkanal können beispielsweise auch während eines Verbindungsaufbaus Informationen empfangen und verarbeitet werden.

Ausstiegspunkte lassen sich insbesondere einfach in solchen Objekten für die Signalisierung integrieren, die ein als Zustandsmaschine darstellbares oder durch eine Zustandsmodell beschreibbares Objekt enthalten. Nach dem Wechsel der Bearbeitung eines ersten Objektes über einen Ausstiegspunkt ist das Objekt zur Ausstiegspunktbehandlung zum Empfang einer Information über den Sonderkanal und/oder zum Wechsel zu dem ersten oder einem zweiten Objekt vorgesehen.

Die Erfindung bezieht sich ferner auf ein Koppelelement eines nach dem asynchronen Transfermodus (ATM) arbeitenden Kommunikationssystems.

Ausführungsbeispiele der Erfindung werden nachstehend anhand der Zeichnungen näher erläutert. Es zeigen:
- Fig. 1: ein nach dem asynchronen Transfermodus (ATM) arbeitendes Kommunikationssystem mit einem mehrere Koppelelemente enthaltenden Netzwerk und mehreren Terminals,
- Fig. 2: eine Softwarearchitektur einer in einem Koppelelement enthaltenden Steuerungssoftware und
- Fig. 3: ein Beispiel eines Teil eines Zustandsmodells eines Objektes der Steuerungssoftware.

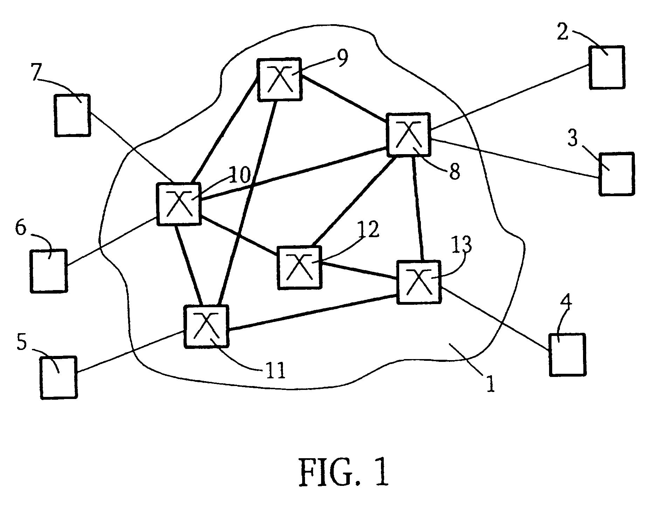

In Fig. 1 ist ein Ausführungsbeispiel eines nach dem asynchronen Transfermodus (ATM) arbeitenden Kommunikationssystem mit einem Netzwerk 1 und mehreren Terminals (Endgeräte) 2 bis 7 dargestellt. Das Netzwerk 1 enthält mehrere Koppelelemente 8 bis 13, die teilweise miteinander und mit den Terminals 2 bis 7 verbunden sind. Beispielsweise ist das Koppelelement 8 mit den Koppelelementen 9, 10, 12 und 13 und mit den Terminals 2 und 3 verbunden.

Ein nach dem asynchronen Transfermodus (ATM) arbeitendes Kommunikationssystem eignet sich für alle Dienste, z.B. zur Sprachübertragung, zur Verteilung von Videosignalen und zur Datenkommunikation. Die mit Hilfe von ATM zu übertragenden Nachrichten oder Informationen werden in Pakete gleicher Länge (Zellen) gepackt, wodurch das Kommunikationssystem nur gleichartige Pakete unabhängig von dem verwendeten Dienst oder der Applikation überträgt. Eine Zelle enthält ein Kopffeld mit 5 Byte, das Wege- und Steuerinformationen enthält, und ein Informationsfeld mit 48 Byte, das Daten enthält.

Mittels Signalisierung wird vor dem Nachrichten- oder Informationstransfer (Datentransfer) eine virtuelle Verbindung aufgebaut und nach Beendigung des Datentransfers wieder abgebaut. Dabei wird zwischen dem Terminal (user side) und dem Netzwerk (network side) eine Vereinbarung über die gewünschten Übertragungseigenschaften, wie Bandbreite, Fehlerrate und Laufzeit getroffen.

Die Festlegung, wie die Benutzerseite (Terminal) und die Netzwerkseite miteinander Daten austauschen und wie diese verarbeitet werden, wird durch eine Schnittstellendefinition getroffen. Die Schnittstelle zwischen Terminal und Netzwerk wird als "User to Network Interface", kurz UNI, bezeichnet. Hierbei wird das von der ITU standardisierte Verfahren Q.2931 verwendet. Die Schnittstelle zwischen zwei Koppelelementen oder auch zwei Netzwerken wird als "Network to Network Interface", kurz NNI, bezeichnet.

Zur Übertragung der Signalisierungsinformationen werden Zellen verwendet, die als Kontrollzellen bezeichnet werden. Nach einem Verbindungsaufbau, wenn für die Übertragung zwischen zwei Endgeräten ein virtueller Kanal zur Verfügung gestellt worden ist, werden die Nutzdaten über Zellen transportiert, die als Nutzzellen bezeichnet werden. Die beiden Zellarten können über ein bestimmte Information im Kopffeld einer Zelle unterschieden werden. Die beiden unterschiedlichen Daten - einerseits Signalisierungsdaten und andererseits Nutzdaten - werden in einem Terminal und einem Koppelelement unterschiedlich weitergeleitet oder kanalisiert. Somit kann ein ATM-Nutzkanal für den Transport von Nutzdaten und ein ATM-Signalisierungskanal für den Transport von Signalisierungsdaten definiert werden.

Ein Koppelelement 8 bis 13 enthält ein Koppelfeld, das anhand der in einer Zelle enthaltenen Wegeinformation einen Weg im Koppelfeld schaltet. Für die Wegesteuerung und für die Signalisierung enthält ein Koppelelement 8 bis 13 auch eine Steuerungsvorrichtung, die beispielsweise aus einem Mikrocomputer mit darin enthaltener Steuerungssoftware besteht. Eine Softwarearchitektur einer solchen Steuerungsvorrichtung kann durch die in Fig. 2 schematisch dargestellten Softwareobjekte beschrieben werden. Eine erste Gruppe 14 von Objekten enthält ein Objekt 17 (SwSi) zur Erzeugung und zum Empfang von Signalisierungs-Nachrichten (switch signalling), ein Objekt 18 (EH) zur Ausstiegspunktbehandlung (event handling) und eine Objekt 19 (CCI) mit einer Schnittstellenfunktion (call control interface). Eine zweite Gruppe 16 von Objekten enthält ein Objekt 20 (CaCo) zur Verbindungssteuerung (call control), ein Objekt 21 (ReCo) zur Ressourceninformation (resource control) und ein Objekt 22 (CaAd) zur Zugangssteuerung (call admission control). Nachrichten zwischen der ersten Gruppe 14 und der zweiten Gruppe 16 von Objekten werden über eine weiteres Objekt 15 (SCI) mit einer Schnittstellenfunktion (switch control interface) ausgetauscht. Die beiden Objekte 15 und 19 mit einer Schnittstellenfunktion prüfen die Gültigkeit von ankommenden Nachrichten und Befehle und übersetzen diese in bestimmte Nachrichten und Befehle.

Für eine aufzubauende oder aufgebaute Verbindung sind jeweils neue Objekte 17 (SwSi), 18 (EH) und 20 (CaCo) zu kreieren. Die Objekte 15 (SCI), 19 (CCI), 21 (ReCo) und 22 (CaAd) existieren unabhängig von der Anzahl der Verbindungen nur einmal und können von anderen Objekten aufgerufen werden.

Das Objekt 17 (SwSi) dient dazu, die Signalisierung nach dem UNI/NNI-Protokoll durchzuführen. Nach der Signalisierung wird ein Nutzkanal zur Verfügung gestellt, der durch die Kennungen VPI (virtual path identifier) und VCI (virtual circuit identifier) gekennzeichnet ist. Ein VCI gibt eine indirekte Adressierung für den Bestimmungsort einer Zelle und damit eine virtuelle Verbindung an. Ein VPI gibt ein Bündel mehrerer virtueller Verbindungen an. Das Objekt 15 (SCI) setzt die von SwSi 17 empfangenen Signalisierungsdaten um und sendet die umgesetzten Signalisierungsdaten an die zweite Gruppe 16 von Objekten.

Das Objekt 20 (CaCo) baut nach einer entsprechenden Aufforderung eine Verbindung auf- oder ab. Dabei greift CACo 20 auf die Objekte 21 (ReCo) und 22 (CaAd) zu. ReCo 21 liefert Informationen über den aktuellen Status der Netzwerk-Ressourcen. So kann beispielsweise von ReCo 21 angegeben werden, ob noch eine Verbindung mit einer Bandbreite von 30 Mbit/s möglich ist. CaAd 22 entscheidet nach Empfang eines neuen Verbindungswunsches, ob die Verbindung akzeptiert oder zurückgewiesen wird. CaAd 22 akzeptiert eine Verbindung, wenn das Netzwerk genug Ressourcen hat und bestimmte QoS-Anforderungen (QoS = Quality of Service) erfüllt sind. Eine Wegetabelle für das Koppelfeld eines Koppelelementes ist ebenfalls Teil des Objektes 22 (CaAd). Das Objekt 20 (CaCo) enthält insbesondere eine Liste aller aufzubauenden, aufgebauten und abzubauenden Verbindungen mit den entsprechenden Informationen (z.B. VPI, VCI). Der Informationsfluß zwischen CaCo 20, ReCo 21 und CaAd 22 findet in der Regel direkt zwischen den Objekten 20, 21 und 22 statt. Der Datenaustausch zwischen der ersten Gruppe 14 und der zweiten Gruppe 16 wird über SCI 15 abgewickelt.

Die Objekte 17 (SwSi) und 20 (CaCo) weisen verschiedene Zustände (state machine) auf, die über ein Zustandsmodell beschreibbar sind. Das Objekt 21 (ReCo) enthält hauptsächlich Tabellen und das Objekt 22 (CaAd) Prüfalgorithmen. Die Objekte 21 (ReCo) und 22 (CaAd) können als Zustandsmaschinen dargestellt werden. Beispielsweise empfängt das Objekt 20 (CaCo) einen Verbindungswunsch und geht in einen Zustand über, der verschiedene Aktionen auslöst. Beispielsweise wird eine Nachricht an ReCO 21 gesendet, ob eine Verbindung mit der geforderten Bandbreite möglich ist. Bei bestimmten Zuständen sind Ausstiegspunkte DP (detection points) eingefügt. Ist ein Zustand mit einem Ausstiegspunkt erreicht wird eine Nachricht an das Objekt 18 (EH) gesendet, welche prüft, ob eine bestimmte Aktion durchgeführt werden muß. Hierbei kommuniziert EH 18 über das Objekt 19 (CCI) mit Objekten anderer Koppelelemente oder Terminals. Zum Datenaustausch wird hierbei eine weitere Zellenart verwendet, die Sonderzelle genannt wird, und damit einen weiteren Kanal bildet, der Sonderkanal genannt wird. Über den Sonderkanal kann auf allgemeine Informationen zurückgegriffen werden, z.B. Adresseninformationen. Managementinformationen.

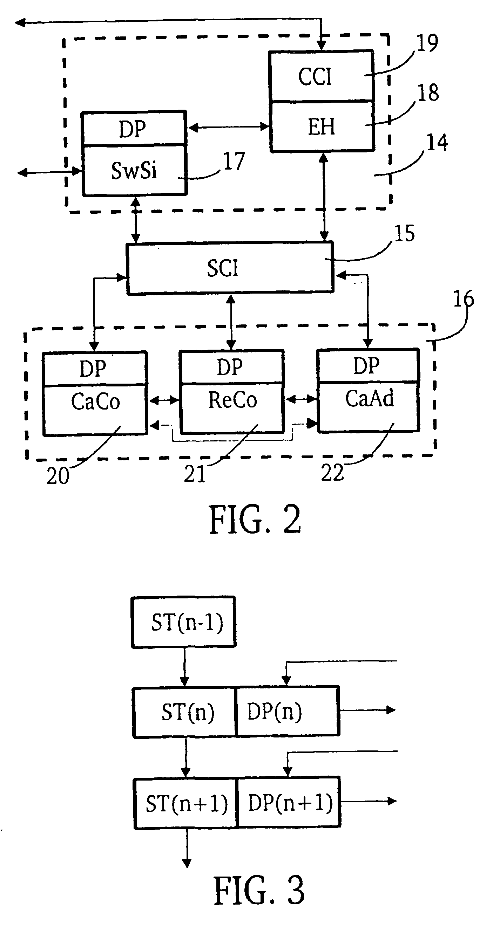

In Fig. 3 ist ein Beispiel für einen Teil eines Zustandsmodells gezeigt. Ein Objekt wechselt dabei von einem Zustand ST(n-1) über einen Zustand ST(n) in einen Zustand ST(n+1). Dem Zustand ST(n) ist ein Ausstiegspunkt DP(n) und dem Zustand ST(n+1) ein Ausstiegspunkt DP(n+1) zugeordnet. Nach Erreichen des Zustandes ST(n) wird über den Ausstiegspunkt DP(n) zum Objekt 18 (EH) gewechselt, das entscheidet, ob beispielsweise Informationen über den Sonderkanal geholt werden müssen oder ob ein anderes Objekt mit der weiteren Bearbeitung fortfahren muß. Über den Sonderkanal eingeholte Informationen werden beispielsweise dem Objekt geliefert und die Anweisung mit der Bearbeitung fortzufahren. In der Fig. 3 wird dies durch einen zum Ausstiegspunkt DP(n) oder DP(n + 1) führenden Pfeil angedeutet.

Es können in den Objekten 17 (SwSi), 20 (CaCo), 21 (ReCo) und 22 (CaAd) Ausstiegspunkte DP enthalten sein, was in der Fig. 3 durch die Buchstaben DP angedeutet ist. Es ist aber auch möglich nur in SwSi 17 oder in CaCo 20, ReCo 21 und CaAd 22 oder in einem oder mehreren Objekten der zweiten Gruppe 16 Ausstiegspunkte vorzusehen.

Verschiedene Vorrichtungen im Kommunikationssystem, z.B. Terminals, enthalten in der Steuerungssoftware ihrer Steuerungsvorrichtungen Objekte, welche Empfänger von Daten des Sonderkanals darstellen. Solche Objekte können mit weiteren Objekten der Steuerungssoftware kommunizieren und beispielsweise Daten abfragen.

Die Arbeitsweise des Objektes 18 (EH) der Fig. 2 kann anhand eines exemplarischen Beispiels näher erläutert werden. Hierbei sei davon ausgegangen, daß die Terminals 2 bis 7 der Fig. 1 beweglich sind. Eine Benutzer X des Terminals 7 möchte mit einem Benutzer Y des Terminals 2 eine Verbindung aufbauen. Die Terminals 2 bis 7 sind durch eindeutige Adressen gekennzeichnet. Es sei vorausgesetzt, daß das bewegliche Terminal 2 nicht mehr mit dem Koppelelement 8 sondern mit dem Koppelelement 13 verbunden ist. Dieser Standortwechsel wird in einen Server eingetragen. Nach Empfang eines Verbindungswunsches des Benutzers X des Terminals 7 werden die entsprechenden Objekte der Steuerungssoftware des Koppelelementes 10 aufgerufen. Kommt das Objekt 22 (CaAd) bei der Wegesuche in einen Zustand, wo überprüft wird, wo sich der Benutzer Y befindet, wird die Bearbeitung an das entsprechende Objekt 18 (EH) weitergegeben. Das Objekt 18 (EH) sendet über den Sonderkanal eine Anfrage an einen Server, der beispielsweise das Terminal 5 ist und die Adressen und den Aufenthaltsort aller Anwendungen verwaltet. Nachdem das Objekt 18 (EH) die Mitteilung von dem Terminal 5 erhalten hat, daß das Terminal 2 mit dem Koppelelement 13 verbunden ist, wird diese Information an das Objekt 22 (CaAd) gesendet und die Kontrolle wieder an CaAd 22 zurückgegeben. Daraufhin können die entsprechenden virtuellen Verbindungswege geschaltet werden.

## Patentansprüche

1. Nach dem asynchronen Transfermodus, ATM arbeitendes Kommunikationssystem mit mehreren Koppelelementen, (8,..,13) die
- ein Netzwerk (1) bilden und die teilweise untereinander und mit Terminals (2,...,7) gekoppelt sind und
- jeweils ein Koppelfeld und eine Steuerungssoftware wenigstens zur Steuerung des jeweiligen Koppelfeldes und für die Signalisierung enthalten,
**dadurch gekennzeichnet,**
**daß** wenigstens ein Objekt der Steuerungssoftware (20) bei bestimmten Zuständen Ausstiegspunkte enthält,
**daß** ein Objekt zur Ausstiegspunktbehandlung der Steuerungssoftware (18) bei Erreichen eines Ausstiegspunktes zur weiteren Verarbeitung vorgesehen ist und
**daß** das Objekt zur Ausstiegspunktbehandlung (18) über einen Sonderkanal zum Empfang von Daten von wenigstens einem Terminal oder einem anderen Koppelelement vorgesehen ist.

2. Kommunikationssystem nach Anspruch 1,
**dadurch gekennzeichnet,**
**daß** wenigstens ein für die Signalisierung zuständiges und als Zustandsmaschine darstellbares oder durch eine Zustandsmaschine beschreibbares Objekt bei bestimmten Zuständen Ausstiegspunkte enthält.

3. Kommunikationssystem nach Anspruch 1,
**dadurch gekennzeichnet,**
**daß** der Sonderkanal durch den Transport von Informationen über eine bestimmte Zellart realisiert wird.

4. Kommunikationssystem nach Anspruch 1,
**dadurch gekennzeichnet,**
**daß** nach dem Wechsel der Bearbeitung eines ersten Objektes über einen Ausstiegspunkt das Objekt zur Ausstiegsbehandlung zum Empfang einer Information über den Sonderkanal und/oder zum Wechsel zu dem ersten oder einem zweiten Objekt vorgesehen ist.

5. Koppelelement (8,..., 13) eines nach dem asynchronen Transfermodus ATM arbeitenden Kommunikationssystems, das
- mit mehreren anderen Koppelelementen ein Netzwerk (1) bildet und das wenigstens mit einem anderen Koppelelement gekoppelt ist und
- ein Koppelfeld und eine Steuerungssoftware wenigstens zur Steuerung des Koppelfeldes und für die Signalisierung enthält,
**dadurch gekennzeichnet,**
**daß** wenigstens ein Objekt der Steuerungssoftware (20) bei bestimmten Zuständen Ausstiegspunkte enthält.
**daß** ein Objekt zur Ausstiegspunktbehandlung der Steuerungssoftware (18) bei Erreichen eines Ausstiegspunktes zur weiteren Verarbeitung vorgesehen ist und
**daß** das Objekt zur Ausstiegspunktbehandlung (18) über einen Sonderkanal zum Empfang von Daten von wenigstens einem Terminal oder einem anderen Koppelelement vorgesehen ist.

## Claims

1. A communication system operating in the asynchronous transfer mode ATM and having several nodes (8, ..., 13) which
- form a network and are coupled partly to one another and to terminals (2, ..., 7), and which
- each comprise a switch field and a control software at least for controlling the relevant switch and for signaling,
**characterized in that**
at least one object of the control software (20) comprises detection points in certain states, one object for event handling of the control software (18) is provided for further processing when a detection point is reached, and
the object for event handling (18) is designed for receiving data from at least one terminal or one other node via a special channel.

2. A communication system as claimed in claim 1, **characterized in that** at least one object, which is responsible for the signaling and can be represented as a state machine, or can be described by a state machine, comprises detection points in certain states.

3. A communication system as claimed in claim 1, **characterized in that** the special channel is realized by means of the transport of information via a given cell type.

4. A communication system as claimed in claim 1, **characterized in that**, after the switch-over of the processing of a first object via a detection point, the object for event handling is provided for receiving an information via the special channel and/or for switching over to the first or to a second object.

5. A node (8, ..., 13) of a communication system operating in the asynchronous transfer mode ATM, which
- forms a network (1) with several other nodes and is coupled to at least one other node, and which
- comprises a switch and a control software at least for controlling the switch field and for the signaling,
**characterized in that**
at least one object of the control software (20) comprises detection points in certain states, one object for event handling of the control software (18) is provided for further processing when a detection point is reached, and
the object for event handling (18) is designed for receiving data from at least one terminal or one other node via a special channel.

## Revendications

1. Système de communication fonctionnant selon le mode de transfert asynchrone ATM avec plusieurs éléments de connexion (8,...,13), qui
- forment un réseau (1) et sont couplés partiellement les uns avec les autres et avec des terminaux (2,...,7) et
- contiennent à chaque fois une zone de connexion et un logiciel de commande au moins pour la commande de la zone de connexion correspondante et pour la signalisation,
**caractérisé en ce**
**qu'**au moins un objet du logiciel de commande (20) contient des points de sortie pour des états déterminés,
**qu'**un objet pour le traitement du point de sortie du logiciel de commande (18) est prévu lors de la réalisation d'un point de sortie en vue du traitement supplémentaire et
**que** l'objet en vue du traitement du point de sortie (18) est prévu sur un canal spécial pour la réception de données d'au moins un terminal ou un autre élément de connexion.

2. Système de communication selon la revendication 1,
**caractérisé en ce**
**qu'**au moins un objet compétent pour la signalisation ou pouvant être représenté comme machine d'état ou pouvant être décrit par une machine d'état contient des points de sortie pour des état déterminés.

3. Système de communication selon la revendication 1,
**caractérisé en ce**
**que** le canal spécial est réalisé par le transport d'informations sur un genre de cellule déterminé.

4. Système de communication selon la revendication 1,
**caractérisé en ce**
**qu'**après le changement de traitement d'un premier objet sur un point de sortie, l'objet en vue du traitement du point de sortie est prévu pour la réception d'une information sur le canal spécial et/ou pour le changement au premier ou à un deuxième objet.

5. Elément de couplage (8,...,13) d'un système de communication fonctionnant selon le mode de transfert asynchrone ATM qui
- forme un réseau (1) avec plusieurs autres éléments de connexion et qui est couplé avec au moins un autre élément de connexion et
- contient une zone de connexion une zone de connexion et un logiciel de commande au moins pour la commande de la zone de connexion et pour la signalisation,
**caractérisé en ce**
**qu'**au moins un objet du logiciel de commande (20) contient des points de sortie pour des états déterminés,
**qu'**un objet en vue du traitement du point de sortie du logiciel de commande (18) est prévu lors de la réalisation d'un point de sortie pour le traitement supplémentaire et
**que** l'objet en vue du traitement du point de sortie (18) est prévu sur un canal spécial pour la réception de données d'au moins un terminal ou d'un autre élément de connexion.
